(19) Europäisches Patentamt
European Patent Office
Office européen des brevets

(11) EP 4 810 446 A1

(12) **EUROPEAN PATENT APPLICATION**

(43) Date of publication:
**23.09.2026 Bulletin 2026/39**

(21) Application number: **26164783.8**

(22) Date of filing: **13.03.2026**

(51) International Patent Classification (IPC):
***C01G 53/00*** *(2025.01)*

(52) Cooperative Patent Classification (CPC):
**C01G 53/506; C01G 53/84;** C01P 2002/76; C01P 2004/51; C01P 2004/54; C01P 2004/61

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.03.2025 JP 2025046342**

(71) Applicant: **Toyota Jidosha Kabushiki Kaisha**
**Toyota-shi, Aichi-ken 471-8571 (JP)**

(72) Inventor: **OHSAWA, Ryosuke**
**TOYOTA-SHI, AICHI-KEN, 471-8571 (JP)**

(74) Representative: **Cabinet Beau de Loménie**
**103, rue de Grenelle / CS 90800**
**75340 Paris Cedex 07 (FR)**

# (54) CATHODE ACTIVE MATERIAL

(57) Provided is a cathode active material (100) configured to decrease the rate of resistance increase that is due to battery charge and discharge, the cathode active material (100) comprising at least one element selected from the group consisting of a Ni element, a Co element and a Mn element, wherein the cathode active material is in a form of two or more stacked primary particles; wherein the primary particles are single crystals that have a crystal structure belonging to space group R-3m; wherein the two or more stacked primary particles as the cathode active material include at least a first particle (10) and a second particle (20), and the first and second particles are sequentially connected; and wherein the first particle and the second particle are stacked so that the 003 plane of the first particle and that of the second particle are in parallel.

FIG. 1

100
003
104
L1
10
003
20
L2
003
104
003
L3
003
104
30
003
L4
40
104
003



Processed by Luminess, 75001 PARIS (FR)

## Description

BACKGROUND

Various studies have been proposed for cathode active materials as disclosed in Patent Documents 1 and 2.

Patent Document 1: Japanese Patent Application Laid-Open (JP-A) No. 2013-65397
Patent Document 2: International Publication No. WO2012/046557

Various cathode active materials have been proposed for obtaining cathodes that have high battery characteristics such as high cycle characteristics and high output characteristics.

The cathode active material particles of Patent Document 1 are in such a state, that particles oriented to lithium intercalation/deintercalation planes are dispersed and arranged in an aggregation of many particles oriented to 003 planes. The short side surfaces of primary particles are 003 planes and connected to one another, thereby forming secondary particles. It is thought that the structure of such particles is likely to change due to battery charge and discharge, causing an increase in battery resistance.

SUMMARY

The present disclosure was achieved in light of the above circumstances. An object of the present disclosure is to provide a cathode active material configured to decrease the rate of resistance increase that is due to battery charge and discharge.

The present disclosure includes the following embodiments.

<1> A cathode active material comprising at least one element selected from the group consisting of a Ni element, a Co element and a Mn element,

wherein the cathode active material is in a form of two or more stacked primary particles;
wherein the primary particles are single crystals that have a crystal structure belonging to space group R-3m;
wherein the two or more stacked primary particles as the cathode active material include at least a first particle and a second particle, and the first and second particles are sequentially connected;
wherein, at a periphery of the cathode active material when the cathode active material is viewed in cross-section under a transmission electron microscope, at least part of a 003 plane of each of the primary particles is exposed;
wherein the first particle and the second particle are oriented and stacked so that the 003 plane of the first particle and that of the second particle are in parallel; and
wherein, when the cathode active material is viewed in cross-section under the transmission electron microscope, a length of the first particle in a direction parallel to the 003 planes of the primary particles, is different from that of the second particle in the same direction.

<2> The cathode active material according to the above <1>,

wherein the cathode active material is in a form of three or more stacked primary particles;
wherein, at the periphery of the cathode active material when the cathode active material is viewed in cross-section under the transmission electron microscope, the at least part of the 003 plane of each of the primary particles is exposed;
wherein the primary particles are oriented and stacked so that the 003 planes of the primary particles are in parallel; and
wherein, when the cathode active material is viewed in cross-section under the transmission electron microscope, lengths of the adjacent primary particles in the direction parallel to the 003 planes of the primary particles, are different from each other.

<3> The cathode active material according to the above <1> or <2>,

wherein, at the periphery of the cathode active material when the cathode active material is viewed in cross-section under the transmission electron microscope, a plane different from the 003 plane of each of the primary particles is exposed in a direction perpendicular to the 003 plane of the primary particle; and
wherein the plane different from the 003 plane of each of the primary particles is a 012, 101, 104 or 110 plane.

<4> The cathode active material according to the above <1> or <3>, wherein the cathode active material is in a form of two or more and 100 or less stacked primary particles.
<5> The cathode active material according to any one of the above <1> to <4>, wherein a ratio of the length of the first particle in the direction parallel to the 003 planes of the primary particles to that of the second particle in the same direction, is from 1.1 to 2.0.
<6> The cathode active material according to the above <1>, wherein (D90-D10)/D50 in a volume-based particle size distribution of the two or more stacked primary particles is 1.30 or more and 1.70 or less.
<7> A cathode layer comprising the cathode active material defined by any one of the above <1> to <6>.
<8> A battery comprising a cathode layer comprising the cathode active material defined by any one of the above <1> to <6>.
<9> A method for producing the cathode active material defined by any one of the above <1> to <6>, the method comprising:

a first sintering step of obtaining a precursor of the cathode active material by sintering a first mixture of a large particle of a transition metal hydroxide and a small particle thereof, which has a smaller particle diameter than that of the large particle, at a temperature of from 700°C to 1100°C,
a magnetic field applying step of applying a magnetic field to a slurry obtained by dispersing the precursor of the cathode active material in a solvent,
a drying step of obtaining a dried product by drying the slurry, and
a second sintering step of obtaining the cathode active material by sintering the dried product at a temperature of from 800°C to 1000°C.

According to the present disclosure, a cathode active material configured to decrease the rate of resistance increase that is due to battery charge and discharge, is provided.

BRIEF DESCRIPTION OF THE DRAWING

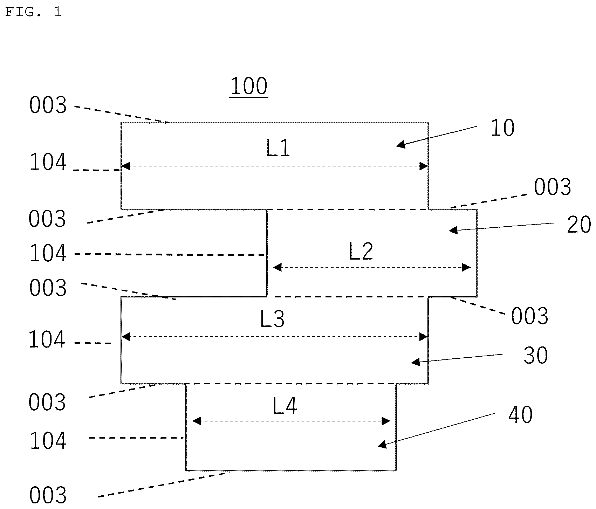

FIG. 1 is a schematic view of an example of the structure of the cathode active material of the present disclosure.

DETAILED DESCRIPTION

Hereinafter, the embodiments of the present disclosure will be described in detail. Matters that are required to implement the present disclosure (such as common structures and production processes of cathode active materials not characterizing the present disclosure) other than those specifically referred to in the Specification, may be understood as design matters for a person skilled in the art based on conventional techniques in the art. The present disclosure can be implemented based on the contents disclosed in the Specification and common technical knowledge in the art.
In addition, dimensional relations (such as length, width and thickness) in the drawing do not reflect actual dimensional relations.
In the present disclosure, unless otherwise noted, a singular noun may encompass a plural noun. For example, the word "particle" may encompass "particles" (a group of particles).
In the present disclosure, an example of the method for calculating the average particle diameter of particles is as follows. First, for a particle shown in an image taken at an appropriate magnification (e.g., 50,000x to 1,000,000x) with a transmission electron microscope (hereinafter referred to as TEM) or a scanning electron microscope (hereinafter referred to as SEM), the diameter when the particle is considered spherical, is calculated. Such a particle diameter calculation by TEM or SEM observation is carried out on 2 to 300 particles of the same type, and the average of the diameters of the particles is determined as the average particle diameter.

1. Cathode active material

According to the present disclosure, provided is a cathode active material comprising at least one element selected from the group consisting of a Ni element, a Co element and a Mn element,

wherein the cathode active material is in a form of two or more stacked primary particles;
wherein the primary particles are single crystals that have a crystal structure belonging to space group R-3m;
wherein the two or more stacked primary particles as the cathode active material include at least a first particle and a second particle, and the first and second particles are sequentially connected;
wherein, at a periphery of the cathode active material when the cathode active material is viewed in cross-section under a transmission electron microscope, at least part of a 003 plane of each of the primary particles is exposed;

wherein the first particle and the second particle are oriented and stacked so that the 003 plane of the first particle and that of the second particle are in parallel; and
wherein, when the cathode active material is viewed in cross-section under the transmission electron microscope, a length of the first particle in a direction parallel to the 003 planes of the primary particles, is different from that of the second particle in the same direction.

In the present disclosure, the 003 plane, which is a stable plane, and the different plane such as the 104 plane, which is a Li intercalation/deintercalation plane, are alternately exposed. Accordingly, stress relaxation occurs, and destruction of the particles in the cathode active material is suppressed. Since the 003 plane and the different plane are alternately exposed, the structure of the particles in the cathode active material is maintained during battery charge and discharge, and an increase in battery resistance is suppressed, accordingly.

FIG. 1 is a schematic view of an example of the structure of the cathode active material of the present disclosure. As shown in FIG. 1, a cathode active material 100 (the cathode active material of the present disclosure) includes a first particle 10, a second particle 20, a third particle 30 and a fourth particle 40, and the particles are sequentially connected.

At the periphery of the cathode active material 100 when the cathode active material is viewed in cross-section, at least part of the 003 plane of each of the primary particles 10 to 40 is exposed.

The primary particles 10 to 40 are oriented and stacked so that the 003 planes of the primary particles 10 to 40 are in parallel. That is, the primary particles 10 to 40 are not stacked in the direction parallel to the 003 planes.

When the cathode active material 100 is viewed in cross-section, the length L1 of the first particle 10 in the direction parallel to the 003 planes of the primary particles 10 to 40, is longer than the length L2 of the second particle 20 in the same direction; the length L2 of the second particle 20 in the same direction is shorter than the length L3 of the third particle 30 in the same direction; and the length L3 of the third particle 30 in the same direction is longer than the length L4 of the fourth particle 40 in the same direction.

At the periphery of the cathode active material 100 when the cathode active material is viewed in cross-section, the 104 planes of the primary particles 10 to 40 are exposed in the direction perpendicular to the 003 planes of the primary particles 10 to 40. Accordingly, at the periphery of the cathode active material 100 when the cathode active material is viewed in cross-section, the 003 planes and the 104 planes that are planes different from the 003 planes, are alternately exposed in the cathode active material 100.

The cathode active material is only required to contain at least one transition metal (TM) element selected from the group consisting of a Ni element, a Co element and a Mn element. The cathode active material may be a lithium-transition metal composite oxide containing Li, a transition metal and O. The lithium-transition metal composite oxide is only required to contain at least a Ni element as the transition metal, and it may contain two transition metals, may contain three transition metals, or may contain 4 or more transition metals. As the transition metal, examples include, but are not limited to, Ti, V, Cr, Mn, Fe, Co, Ni, Zr and Nb.

As the transition metal, the lithium-transition metal composite oxide is only required to contain at least Ni. As the transition metal, it may further contain Co, Ni and so on.

In addition to the Li and the transition metal, the lithium-transition metal composite oxide may contain a metal $M^1$ which is a metal different from the Li and the transition metal and which may be a semimetal. As the different metal $M^1$, examples include, but are not limited to, Al, Si, Ga, Ge, In and Sn.

The lithium-transition metal composite oxide may contain Li, Ni, Co, Mn and O.

With respect to 1 mol that is the total of all the metals (excluding the Li) contained in the lithium-transition metal composite oxide, the total amount of the Ni, Co and Mn contained in the lithium-transition metal composite oxide is 0.80 mol or more, for example. The total amount may be 0.90 mol or more, may be 0.95 mol, or may be 1 mol. The total amount of the Ni, Co and Mn encompasses such a case, that the amount of one or two of the Ni, Co and Mn is 0.

The lithium-transition metal composite oxide may have a composition represented by the general formula LixNiaCobMncOy (where $0.1 \leq x \leq 1.5$; $0.5 \leq a \leq 1.0$; $0 \leq b \leq 0.3$; $0 \leq c \leq 0.3$; $a+b+c = 1.0$; and $1.5 \leq y \leq 2.1$).

In the general formula, the Li composition ratio "x" is only required to satisfy the relationship of $0.1 \leq x \leq 1.5$. For example, the Li composition ratio "x" may be 0.4 or more, 0.6 or more, 0.8 or more, 1.0 or more, or 1.1 or more. For example, the Li composition ratio "x" may be 1.4 or less, or it may be 1.2 or less.

In the above general formula, the O composition ratio "y" is only required to satisfy the relationship of "$1.5 \leq y \leq 2.1$". For example, the O composition ratio "y" may be 1.6 or more, 1.7 or more, 1.8 or more, or 1.9 or more. For example, the O composition ratio "y" may be 2.0 or less.

In the above general formula, the Ni composition ratio "a", the Co composition ratio "b" and the Mn composition ratio "c" satisfy the relationship of "$a+b+c = 1.0$".

In the above general formula, the Ni composition ratio "a" is only required to satisfy the relationship of "$0.5 \leq a \leq 1.0$". For example, the Ni composition ratio "a" may be 0.6 or more, 0.7 or more, 0.8 or more, or 0.85 or more. For example, the Ni composition ratio "a" may be 0.9 or less.

In the above general formula, the Co composition ratio "b" is only required to satisfy the relationship of "$0 \leq b \leq$

0.3". For example, the Co composition ratio "b" may be 0.01 or more, 0.02 or more, 0.03 or more, 0.04 or more, 0.05 or more, 0.06 or more, 0.07 or more, or 0.075 or more. For example, the Co composition ratio "b" may be 0.25 or less, 0.20 or less, 0.15 or less, 0.10 or less, 0.09 or less, or 0.08 or less.

In the above general formula, the Mn composition ratio "c" is only required to satisfy the relationship of "$0 \leq c \leq 0.3$". For example, the Mn composition ratio "c" may be 0.01 or more, 0.02 or more, 0.03 or more, 0.04 or more, 0.05 or more, 0.06 or more, 0.07 or more, or 0.075 or more. For example, the Mn composition ratio "c" may be 0.25 or less, 0.20 or less, 0.15 or less, 0.10 or less, 0.09 or less, or 0.08 or less.

A desired dopant may be added to the lithium-transition metal composite oxide. The dopant shows an element other than Li, Ni, Co, Mn and O. For example, the dopant may include at least one selected from the group consisting of Zr, Mo, Mg, Ca, Na, Fe, Cr, Zn, Si, Sn, Al and Ag. For example, the composition ratio "d" of the dopant may be 0.005 or more, 0.01 or more, 0.02 or more, 0.03 or more, or 0.04 or more with respect to $a+b+c = 1.0$. For example, the composition ratio "d" of the dopant may be 0.05 or less, with respect to $a+b+c = 1.0$.

The cathode active material is a cathode active material for a battery. The details of the battery will be described later.

The cathode active material may be in the form of two or more stacked primary particles, or it may be in the form of n stacked primary particles. As used herein, "n" is only required to be an integer of 2 or more, and the upper limit may be 100 or less, 50 or less, 10 or less, 4 or less, or 3 or less, for example.

The primary particles of the cathode active material are single crystals that have a crystal structure belonging to space group R-3m. In a SEM image, the single crystals appear as non-aggregated, independent particles (primary particles). In a SEM image, the single crystals appear not to have a grain boundary. The magnification of the SEM image may be from 10,000x to 30,000x, for example.

The crystal structure of the primary particles of the cathode active material may be a layered rock salt structure.

The cathode active material may be polycrystals, each of which consists of two or more stacked primary particles. In the SEM image, the cathode active material has one or more grain boundaries. The upper limit may be 100 grain boundaries or less, may be 50 grain boundaries or less, may be 10 grain boundaries or less, may be 3 grain boundaries or less, or may be 2 grain boundaries or less.

The cathode active material may be particles. The cathode active material particles may be secondary particles, each of which consists of two or more stacked primary particles.

The particle diameter of the primary particles of the cathode active material may be 0.5 μm or more, may be 0.6 μm or more, may be 0.8 μm or more, or may be 1.0 μm or more. When the particle diameter of the primary particles is too small, there is a possibility that the particles are poorly grown particles and have a difficulty in being produced as single crystals. On the other hand, the particle diameter of the primary particles is 10 μm or less, for example. The particle diameter may be 5 μm or less, or it may be 3 μm or less. The particle diameter of the primary particles can be obtained as the longest diameter in a TEM or SEM image. For example, when the cathode layer contains the primary particles, the particle diameter of the primary particles may be obtained from the longest diameter of the primary particles shown in a SEM cross-sectional image of the cathode layer. As used herein, the particle diameter of the primary particles is not the average particle diameter. That is, when the cathode active material contains a plurality of the primary particles, the particle diameter of the primary particles means the particle diameter of each primary particle.

The average particle diameter of the cathode active material particles may be 0.5 μm or more, or it may be 1.0 μm or more, for example. The average particle diameter of the cathode active material particles may be 100 μm or less, or it may be 30 μm or less, for example.

The two or more stacked primary particles as the cathode active material include at least the first particle and the second particle. The cathode active material may further include the third particle, and it may further include the fourth particle. As the two or more stacked primary particles, the cathode active material may include the first to n-th particles that are sequentially connected. As used herein, "n" is only required to be an integer of 2 or more, and the upper limit may be 100 or less, 50 or less, 4 or less, or 3 or less, for example.

At the periphery of the cathode active material when the cathode active material is viewed in cross-section under the transmission electron microscope, at least part of the 003 plane of each of the primary particles is exposed.

The first particle and the second particle are oriented and stacked so that the 003 plane of the first particle and that of the second particle are in parallel. When the cathode active material further include the third particle, the first particle, the second particle and the third particle may be oriented and stacked so that the 003 plane of the first particle, that of the second particle and that of the third particle are in parallel. That is, the primary particles may be oriented and stacked so that the 003 planes of the primary particles are in parallel.

In the present disclosure, the term "parallel" encompasses not only an absolutely parallel structure, but also a structure slightly inclined at an angle of ±5 degrees with respect to adjacent planes.

The primary particles constituting the cathode active material may be such that they are not stacked in the direction parallel to the 003 planes. When the primary particles are not stacked in the direction parallel to the 003 planes, the diffusion length of lithium ions in the cathode active material in the direction parallel to the 003 planes, can be shortened.

At the periphery of the cathode active material when the cathode active material is viewed in cross-section under the transmission electron microscope, a plane different from the 003 plane of each of the primary particles may be exposed in the direction perpendicular to the 003 plane of the primary particle.

The plane different from the 003 plane of each of the primary particles may be a 012, 101, 104 or 110 plane.

When the cathode active material includes the first particle and the second particle and when the cathode active material is viewed in cross-section under the transmission electron microscope, the length of the first particle in the direction parallel to the 003 planes of the primary particles, is different from that of the second particle in the same direction. The length of the first particle may be larger or smaller than the length of the second particle. When the cathode active material includes the third particle in addition to the first particle and the second particle and when the cathode active material is viewed in cross-section under the transmission electron microscope, the length of the first particle in the direction parallel to the 003 planes of the primary particles, may be different from that of the second particle in the same direction, and the length of the second particle in the direction parallel to the 003 planes of the primary particles may be different from that of the third particle in the same direction. As long as the length of the first particle is different from the length of the second particles, the length of the first particle may be the same as the length of the third particle. The lengths of the first and third particles may be large or smaller than the length of the second particle. That is, in the cathode active material, the lengths of the adjacent primary particles in the direction parallel to the 003 planes of the primary particles, are only required to be different from each other. As used herein, the lengths of the primary particles may be the particle diameters of the primary particles or may be different from the particle diameters of the primary particles. When the lengths of the primary particles are the longest diameters of the primary particles in a TEM or SEM image, the lengths of the primary particles are the particle diameters of the primary particles. Since the lengths of the adjacent primary particles in the direction parallel to the 003 planes of the primary particles, are different from each other, at the periphery of the cathode active material when the cathode active material is viewed in cross-section under the transmission electron microscope, the 003 planes and the different planes are alternately exposed in the cathode active material 100.

The ratio of the length of the first particle in the direction parallel to the 003 planes of the primary particles to that of the second particle in the same direction, may be from 1.1 to 2.0. That is, the ratio of the length of the n-th-1 particle to the length of the n-th particle may be from 1.1 to 2.0. As used herein, "n" is only required to be an integer of 2 or more, and the upper limit may be 100 or less, 50 or less, 10 or less, 4 or less, or 3 or less, for example. Also, the ratio of the length of the m-th-1 particle to the length of the m-th particle may be from 1.1 to 2.0. As used herein "m" is only required to be an even number of 2 or more, and the upper limit may be 100 or less, 50 or less, or 4 or less, for example.

In the present disclosure, for the sake of simplicity, among the primary particles that are the third and subsequent particles, those having the same length as the first particle may be regarded as the first particles, and those having the same length as the second particle may be regarded as the second particles.

The (D90-D10)/D50 in the volume-based particle size distribution of the two or more stacked primary particles, may be 1.30 or more and 1.70 or less, or it may be 1.32 or more and 1.65 or less. The volume-based particle size distribution is obtained as follows, for example. From the primary particles of the cathode active material shown in a TEM or SEM image, 2 to 50 particles are randomly selected. The longest radius of each of the selected primary particles are calculated. Based on the calculated radii, a histogram is created, thereby obtaining the volume-based particle size distribution.

The D50 in the volume-based particle size distribution of the first particle may be from 3.1 μm to 4.2 μm, for example.

The D50 in the volume-based particle size distribution of the second particle may be from 1.0 μm to 1.1 μm, for example.

2. Method for producing the cathode active material

According to the present disclosure, a method for producing the above-described cathode active material is provided, the method comprising:

the first sintering step of obtaining the precursor of the cathode active material by sintering the first mixture of the large particle of a transition metal hydroxide and the small particle thereof, which has a smaller particle diameter than that of the large particle, at a temperature of from 700°C to 1100°C,
the magnetic field applying step of applying a magnetic field to a slurry obtained by dispersing the precursor of the cathode active material in a solvent,
the drying step of obtaining a dried product by drying the slurry, and
the second sintering step of obtaining the cathode active material by sintering the dried product at a temperature of from 800°C to 1000°C.

The cathode active material production method of the present disclosure includes (1) the first sintering step, (2) the magnetic field applying step, (3) the drying step and (4) the second sintering step.

In the present disclosure, the primary particles of the transition metal hydroxide are synthesized, which have different particle diameters. They are mixed, and the precursor of the cathode active material is obtained by sintering the mixture (the first sintering step). Next, the magnetic field is applied to the slurry containing the precursor for magnetic field orientation of the precursor, thereby aligning the crystal orientations of the primary particles in the precursor. Then, the slurry is dried, and the dried slurry is sintered (the second sintering step), thereby connecting the 003 planes of the primary particles. By using, in the first sintering step, the primary particles of the transition metal hydroxide which have different particle diameters, the 003 plane and different plane of the cathode active material particles obtained by the second sintering step are alternately exposed.

(1) First sintering step

The first sintering step is a step of obtaining the precursor of the cathode active material by sintering the first mixture of the large particle of a transition metal hydroxide and the small particle thereof, which has a smaller particle diameter than that of the large particle, at a temperature of from 700°C to 1100°C.

The method for producing the transition metal hydroxide of the present disclosure is not particularly limited, and it may be the following method, for example.

First, the raw material aqueous solution of the transition metal hydroxide is prepared. As the method for producing the raw material aqueous solution, examples include, but are not limited to, dissolving a water-soluble transition metal compound in water. As the transition metal compound, examples include, but are not limited to, a metal salt such as sulfate salt and nitrate salt. As the Ni source, examples include, but are not limited to, $NiSO_4$ and Ni $(NO_3)_2$. As the Co source, examples include, but are not limited to, $CoSO_4$, $Co(NO_3)_2$ and $Co(NO_3)_3$. As the Mn source, examples include, but are not limited to, $MnSO_4$ and $Mn(NO_3)_2$. The composition of the raw material aqueous solution is appropriately adjusted depending on the target cathode active material.

Next, a certain amount of $NH_3$ aqueous solution is put in a reaction container. While stirring the $NH_3$ aqueous solution with a stirrer or the like, the atmosphere inside the reaction container is replaced with an unoxidized atmosphere by nitrogen purging. The nitrogen gas flow rate of the nitrogen purging is not particularly limited. For example, it may be from 2 L/min to 6 L/min.

Then, a sodium hydroxide aqueous solution is put in the reaction container. While keeping the pH of the sodium hydroxide aqueous solution alkaline (e.g., pH 11.3 to pH 12.0), the raw material aqueous solution and another $NH_3$ aqueous solution are added dropwise to the reaction container for 1 to 7 hours, thereby developing a reaction. The reaction temperature is not particularly limited. For example, it may be 50°C or more and 65°C or less. By changing the reaction time, the primary particles of the transition metal hydroxide which have different particle diameters are obtained. For example, by changing the reaction time to one to three hours, the small particle of the transition metal hydroxide is obtained. By changing the reaction time to 5 to 7 hours, the large particle of the transition metal hydroxide is obtained. The small particle has a smaller particle diameter than that of the large particle. When there are a plurality of the large (or small) particles, the particle diameter may be the average particle diameter (D50) thereof.

After the end of the reaction, the reactant may be pre-sintered. It can be carried out at 120°C to 220°C for 4 to 10 hours at 0.2 MPa to 1.0 MPa, for example.

After the end of the reaction or after the end of the presintering, a product thus obtained is washed with water and then filtered, thereby obtaining a transition metal hydroxide. The obtained transition metal hydroxide is subjected to a drying treatment. The drying treatment can be carried out at 110°C for 10 to 12 hours, for example.

In the present disclosure, the transition metal hydroxide contains a transition metal. The transition metal hydroxide may be a nickel-cobalt-manganese composite hydroxide containing nickel (Ni), cobalt (Co) and manganese (Mn). In the nickel-cobalt-manganese composite hydroxide, the ratio (mole ratio) of each metal species to the total amount of the nickel, cobalt and manganese is the same as the composition ratio of the lithium-transition metal composite oxide represented by the above general formula in the cathode active material.

The lithium compound (the Li source) may be, for example, at least one selected from the group consisting of lithium carbonate, lithium nitrate, lithium acetate, lithium hydroxide, lithium oxide, lithium chloride and the like. The lithium compound may be lithium hydroxide. The mole ratio of the Li of the Li source to the TM contained in the transition metal hydroxide may be, for example, 0.4 or more, 0.6 or more, 0.8 or more, 1.0 or more, or 1.1 or more. It may be 1.4 or less or may be 1.2 or less.

The ratio between the lithium compound and transition metal hydroxide in the first mixture is adjusted so that the ratio (mole ratio) of the lithium and the different metal species to the total amount of the lithium in the target cathode active material and the metal species contained in the transition metal hydroxide, is typically equal to the ratio (mole ratio) of the lithium and different metal species in the first mixture. The method for mixing them is not particularly limited, and a known method may be employed.

The first mixture may contain molten salt. Since the molten salt functions as a flux, the primary particles can be sufficiently grown. The molten salt may contain Li. As the molten salt, examples include, but are not limited to, lithium

hydroxide. The mole ratio (Li/TM) of the Li contained in the molten salt to the TM contained in the transition metal hydroxide is 0.01 or more, for example. It may be 0.05 or more, may be 0.10 or more, or may be 0.15 or more. On the other hand, the Li/TM ratio is 0.60 or less, for example. It may be 0.50 or less, may be 0.40 or less, or may be 0.30 or less.

As the Li source and the molten salt, the first mixture may contain lithium hydroxide. The mole ratio (Li'/TM) of the Li contained in the Li source and the molten salt to the TM contained in the transition metal hydroxide is 1.01 or more, for example. It may be 1.05 or more, may be 1.10 or more, or may be 1.15 or more. On the other hand, the Li'/TM ratio is 1.60 or less, for example. It may be 1.50 or less, may be 1.40 or less, or may be 1.30 or less.

The cathode active material that is the lithium-transition metal composite oxide is obtained by sintering the first mixture at a temperature of from 700°C to 1100°C for 8 to 15 hours, for example. To sinter the first mixture, a known furnace such as a muffle furnace can be used.

The lower limit of the sintering temperature of the first sintering step may be 800°C or more, 850°C or more, 900°C or more, or 950°C or more. On the other hand, the upper limit of the sintering temperature may be 1000°C or less.

The sintering time of the first sintering step may be 9 hours or more, or it may be 10 hours or more.

The sintering time of the first sintering step may be 13 hours or less, or it may be 11 hours or less.

In general, the precursor of the cathode active material obtained by sintering the transition metal hydroxide of the present disclosure, is the single-crystal type active material composed of the primary particles.

(2) Magnetic field applying step

The magnetic field applying step is a step of applying a magnetic field to the slurry obtained by dispersing the precursor of the cathode active material in the solvent.

The solvent may be N-methylpyrrolidone (NMP) or the like.

The strength of the applied magnetic field may be from 0.8 T to 2 T, or it may be from 1 T to 1.5 T.

The magnetic field applying time may be from one minute to one hour, or it may be from 5 minutes to 10 minutes.

(3) Drying step

The drying step is a step of obtaining the dried product by drying the slurry.

For example, the drying temperature may be from 90°C to 110°C, or it may be 100°C.

For example, the drying time may be from one minute to one hour, or it may be from 5 minutes to 10 minutes.

(4) Second sintering step

The second sintering step is a step of obtaining the cathode active material by sintering the dried product at a temperature of from 800°C to 1000°C.

The lower limit of the sintering temperature of the second sintering step may be 850°C or more, or it may be 900°C or more. On the other hand, the upper limit of the sintering temperature may be 950°C or less.

The sintering time of the second sintering step may be one hour or more, 9 hours or more, or 10 hours or more. On the other hand, the sintering time of the second sintering step may be 15 hours or less, 13 hours or less, or 11 hours or less.

3. Battery

The cathode active material provided by the present disclosure can be used as, for example, a cathode active material for forming the cathode of a battery such as a lithium ion battery. That is, in the present disclosure, a battery which a cathode, an electrolyte layer and an anode are stacked in this order and which the cathode contains the cathode active material of the present disclosure, is provided.

According to the present disclosure, by using the above-described cathode active material in the battery, the rate of resistance increase that is due to battery charge and discharge is decreased.

Hereinafter, the battery will be described in detail.

[Cathode]

The cathode includes the cathode layer. As needed, it further includes a cathode collector.

The cathode layer is a layer which contains at least the above-described cathode active material of the present disclosure as the cathode active material.

The cathode layer may be disposed on one surface of the cathode collector, or it may be disposed on both surfaces of the cathode collector. The cathode may have a multi-layered structure by forming two or more cathode layers on at least one surface of the cathode collector. In the case of forming two or more cathode layers, the cathode active

materials contained in the cathode layers may be the same type of cathode active material, or they may be different types of cathode active materials.

The cathode active material used in the cathode layer may contain only the cathode active material of the present disclosure, or it may further contain a different active material. As needed, the cathode layer may contain at least one selected from the group consisting of an electrolyte, an electroconductive material and a binder.

For example, the mixing ratio (mass ratio) between the cathode active material of the present disclosure and the different active material may be as follows: "the cathode active material of the present disclosure/the different active material = 9.5/0.5 to 0.5/9.5", "the cathode active material of the present disclosure/the different active material = 9/1 to 1/9", "the cathode active material of the present disclosure/the different active material = 8/2 to 2/8", "the cathode active material of the present disclosure/the different active material = 7/3 to 3/7" or "the cathode active material of the present disclosure/the different active material = 6/4 to 4/6". The different active material may be a polycrystal type active material (polycrystal particles) composed of the secondary particles that are the above-described lithium-transition metal composite oxide. Also, the different active material may be, for example, lithium iron phosphate (olivine structure), lithium manganese phosphate (olivine structure), manganese iron phosphate (olivine structure), $LiMnO_2$ (rock salt structure), $Li(NiMn)_2O_4$ (spinel structure), $LiCoO_2$ (layered structure) or the like.

The percentage of the cathode active material in the cathode layer is 20% by mass or more, for example. It may be 30% by mass or more, or it may be 40% by mass or more. When the percentage of the cathode active material is too small, there is a possibility that a sufficient energy density is not obtained. On the other hand, the percentage of the cathode active material in the cathode layer is 95% by mass or less, for example. It may be 70% by mass or less, or it may be 60% by mass or less. When the percentage of the cathode active material is too large, the ion conductivity and electron conductivity of the cathode layer may relatively decrease.

As the electrolyte, examples include, but are not limited to, a solid electrolyte. The solid electrolyte may be an inorganic solid electrolyte such as a sulfide solid electrolyte, a halide solid electrolyte, an oxide solid electrolyte and a complex hydride solid electrolyte, or it may be an organic solid electrolyte such as a gel electrolyte.

The sulfide solid electrolyte is an electrolyte which contains a S element. In general, the sulfide solid electrolyte contains at least a Li element and a S element. The sulfide solid electrolyte may further contain a M element (M is at least one selected from the group consisting of P, As, Sb, Si, Ge, Sn, B, Al, Ga and In). Also, the sulfide solid electrolyte may contain a halogen element such as F, Cl, Br and I.

The sulfide solid electrolyte may be a glass-based (amorphous) sulfide solid electrolyte, may be a glass-ceramic-based sulfide solid electrolyte, or may be a crystal-based sulfide solid electrolyte. The sulfide solid electrolyte may have a crystal phase. As the crystal phase, examples include, but are not limited to, a Thio-LISICON-type crystal phase, an argyrodite-type crystal phase and a LGPS-type crystal phase.

The composition of the sulfide solid electrolyte is not particularly limited. As the composition, examples include, but are not limited to, $xLi_2S\cdot(1-x)P_2S_5$ (where $0.5 \leq x < 1$) and $yLiI\cdot zLiBr\cdot(100-y-z)(xLi_2S\cdot(1-x)P_2S_5)$ (where $0.5 \leq x < 1$, $0 \leq y \leq 30$ and $0 \leq z \leq 30$). In these compositions, x may satisfy $0.7 \leq x \leq 0.8$. Another example of the composition of the sulfide solid electrolyte is $Li_{7-x}PS_{6-x}X_x$ (where X is at least one selected from the group consisting of F, Cl, Br and I, and x satisfies $0 \leq x < 2$). Another example of the composition of the sulfide solid electrolyte is $Li_{4-x}Me_{1-x}P_xS_4$ (where $0 < x < 1$ and Me is at least one selected from the group consisting of Al, Zn, In, Ge, Si, Sn, Sb, Ga and Bi). As the sulfide solid electrolyte, examples include, but are not limited to, $LiI-LiBr-Li_2S-P_2S_5$, $LiI-Li_2S-P_2S_5$, $LiI-Li_2S-P_2O_5$ and $LiI-Li_3PO_4-P_2S_5$.

As the oxide solid electrolyte, examples include, but are not limited to, a substance having a garnet-type crystal structure containing a Li element, La element, an A element (A is at least one selected from the group consisting of Zr, Nb, Ta and Al) and an O element. For example, the oxide solid electrolyte may be $Li_2O-B_2O_3-P_2O_5$, $Li_2O-SiO_2$, $Li_2O-B_2O_3$, $Li_{1.3}Al_{0.3}Ti_{0.7}(PO_4)_3$, $Li_5La_3Ta_2O_{12}$, $Li_7La_3Zr_2O_{12}$, $Li_6BaLa_2Ta_2O_{12}$, $Li_{3.6}Si_{0.6}P_{0.4}O_4$, $Li_4SiO_4$, $Li_3PO_4$, $Li_{3+x}PO_{4-x}N_x$ (where $1 \leq x \leq 3$) or the like.

For example, the halide solid electrolyte may be a solid electrolyte containing Li, D and X (D is at least one selected from the group consisting of Ti, Al and Y, and X is F, Cl or Br) .

The gel electrolyte may contain an electrolytic solution and a polymer material. The polymer material may be a material forming a polymer matrix. For example, the polymer material may contain at least one selected from the group consisting of polyvinylidene fluoride (PVdF), poly(vinylidene fluoride-co-hexafluoropropylene) (PVDF-HFP), polyacrylonitrile (PAN), PVdF-PAN, polyethylene oxide (PEO), polyethylene glycol (PEG) and derivatives thereof.

The form of the solid electrolyte may be a particulate form, from the viewpoint of good handleability.

The average particle diameter of the solid electrolyte particles is not particularly limited. It may be from 1 nm to 100 $\mu m$.

The percentage of the solid electrolyte in the cathode layer may be 1% by mass or more, for example. When the percentage of the solid electrolyte is too small, the cathode layer may have a shortage of ion conducting paths. On the other hand, the percentage of the solid electrolyte in the cathode layer may be 60% by mass or less, for example. When the percentage of the solid electrolyte is too large, the percentage of the cathode active material is relatively small, and a low energy density may be obtained.

The cathode layer may contain an electroconductive material. The electron conductivity of the cathode layer is increased by adding the electroconductive material. As the electroconductive material, examples include, but are not limited to, a carbonaceous electroconductive material, metal particles and an electroconductive polymer. As the carbonaceous electroconductive material, examples include, but are not limited to, a particulate material such as Acetylene Black (AB) and Ketjen Black (KB) and a fibrous material such as vapor-grown carbon fiber (VGCF), carbon nanotube (CNT) and carbon nanofiber (CNF).

The percentage of the electroconductive material in the cathode layer may be 0.1% by mass or more, for example. When the percentage of the electroconductive material is too small, the cathode layer may have a shortage of electron conducting paths. On the other hand, the percentage of the electroconductive material in the cathode layer may be 5% by mass or less, for example. When the percentage of the electroconductive material is too large, the percentage of the cathode active material is relatively small, and a low energy density may be obtained.

The cathode layer may contain a binder. As the binder, examples include, but are not limited to, styrene-butadiene rubber (SBR), polyimide (PI), polyacrylic acid (PAA), acrylonitrile-butadiene rubber (NBR), butadiene rubber (BR), polyvinylidene fluoride (PVdF), polytetrafluoroethylene (PTFE), a styrene-isoprene-styrene block copolymer (SIS) and an ethylene-propylene-diene copolymer (EPDM).

The percentage of the binder in the cathode layer may be 0.5% by mass or more, for example. When the percentage of the binder is too small, there is a possibility that an increase in resistance which is due to charge and discharge, cannot be sufficiently reduced. On the other hand, the percentage of the binder in the cathode layer may be 15% by mass or less, for example. When the percentage of the binder is too large, the percentage of the cathode active material is relatively small, and a low energy density may be obtained.

The thickness of the cathode layer is 0.1 μm or more and 1000 μm or less, for example. The thickness of the cathode layer may be 1 μm or more and 500 μm or less, or it may be 30 μm or more and 100 μm or less.

The method for producing the cathode layer is not particularly limited. For example, the production method may be a method including the steps of obtaining a cathode slurry by mixing the cathode active material, the electroconductive material and a solvent, applying the cathode slurry to a cathode collector and drying the applied slurry, thereby forming the cathode layer. To form the cathode layer, a press treatment (pressing the cathode layer in the thickness direction) may be performed. As the press treatment, examples include, but are not limited to, roller pressing and plate pressing.

As the solvent, examples include, but are not limited to, N-methylpyrrolidone (NMP), tetralin, diisobutyl ketone, butyl butyrate, mesitylene, heptane, dibutyl ether, decane, dodecane, isodecane and toluene. The solvent may contain two or more selected from these components.

As the material for the cathode collector, examples include, but are not limited to, SUS, Cr, Au, Pt, Zn, aluminum, copper, nickel, iron, titanium and carbon. The thickness of the cathode collector is 0.1 μm or more and 100 μm or less, for example. The form of the cathode collector may be a foil form, a plate form or the like. The plan view shape of the cathode collector is not particularly limited. As the shape, examples include, but are not limited to, a circular shape, an elliptical shape, a rectangular shape and any polygonal shape. The structure of the cathode collector may be such that a buffer layer, an elastic layer or a positive temperature coefficient (PTC) thermistor layer is disposed on the surface.

[Anode]

The anode includes the anode layer. As needed, it further includes an anode collector.

The anode layer is a layer containing at least an anode active material. As needed, the anode layer may contain at least one selected from the group consisting of an electrolyte, an electroconductive material and a binder. The area of the anode layer may be large compared to the cathode layer.

The anode active material may be in a particulate form or a sheet form, for example. The average particle diameter of the particles of the anode active material may be 1 μm or more, for example. The average particle diameter of the particles of the anode active material may be 30 μm or less, for example.

The anode active material may contain, for example, at least one selected from the group consisting of a carbon-based active material, a Li-based active material, a Si-based active material, a Si-C composite material and lithium titanate.

The carbon-based active material may contain, for example, at least one selected from the group consisting of graphite, soft carbon and hard carbon. The graphite is a general term for natural graphite and artificial graphite. The graphite may be a mixture of natural graphite and artificial graphite. For example, the mixing ratio (mass ratio) between the natural graphite and the artificial graphite may be as follows: "the natural graphite/the artificial graphite = 1/9 to 9/1" or "the natural graphite/the artificial graphite = 3/7 to 7/3".

As the Li-based active material, examples include, but are not limited to, Li, Li silicate and Li alloy.

As the Si-based active material, examples include, but are not limited to, Si, SiO and Si alloy.

The Si-C composite material indicates a composite material composed of a carbon-based active material (such as graphite) and a Si-based active material (such as Si). For example, fine Si particles may be dispersed in a carbon

particle. For example, a Li silicate particle may be coated with a carbonaceous material (such as amorphous carbon).

As the electrolyte, electroconductive material and binder used in the anode layer, examples include, but are not limited to, those exemplified above as the electrolyte, electroconductive material and binder used in the cathode layer.

As needed, the anode layer may contain a thickener. As the thickener, examples include, but are not limited to, carboxymethyl cellulose (CMC).

As the material for the anode collector, examples include, but are not limited to, SUS, aluminum, copper, nickel, iron, titanium and carbon. The thickness of the anode collector varies depending on the form. For example, the thickness may be in a range of from 1 μm to 50 μm. The form of the anode collector may be a foil form, a plate form or the like. The plan view shape of the anode collector is not particularly limited. As the shape, examples include, but are not limited to, a circular shape, an elliptical shape, a rectangular shape and any polygonal shape. The structure of the anode collector may be such that a buffer layer, an elastic layer or a PTC thermistor layer is disposed on the surface.

[Electrolyte layer]

The electrolyte layer is a layer formed between the cathode layer and the anode layer, and it contains at least an electrolyte. The electrolyte may be a solid electrolyte or a liquid electrolyte (an electrolytic solution).

The electrolyte layer may contain a solid electrolyte, an electrolytic solution and so on.

As the solid electrolyte, examples include, but are not limited to, those exemplified above as the solid electrolyte of the cathode layer.

As the electrolytic solution, an aqueous electrolytic solution, a non-aqueous electrolytic solution or the like can be used. They may be used alone or in combination of two or more.

The solvent of the aqueous electrolytic solution contains water as a main component. That is, when the whole amount of the solvent (a liquid component) constituting the electrolytic solution is determined as a reference (100% by mole), the water may account for 50% by mole or more, 70% by mole or more, or 90% by mole or more thereof. On the other hand, the upper limit of the proportion of the water in the solvent is not particularly limited.

While the solvent contains water as the main component, it may contain a solvent other than water. As the solvent other than water, examples include, but are not limited to, one or more selected from the group consisting of an ether, a carbonate, a nitrile, an alcohol, a ketone, an amine, an amide, a sulfur compound and a hydrocarbon. When the whole amount of the solvent (the liquid component) constituting the electrolytic solution is determined as a reference (100% by mole), the solvent other than water may be 50% by mole or less, may be 30% by mole or less, or may be 10% by mole or less.

The aqueous electrolytic solution used in the present disclosure contains an electrolyte. The electrolyte for the aqueous electrolytic solution may be selected from conventionally known electrolytes. As the electrolyte, examples include, but are not limited to, lithium salt, nitrate salt, acetate salt and sulfate salt of imidic acid compounds. More specifically, examples include, but are not limited to, lithium bis(fluorosulfonyl)imide (LiFSI), lithium bis(trifluoromethanesulfonyl)imide (LiTFSI), lithium bis(pentafluoroethanesulfonyl)imide (LiBETI), lithium bis(nonafluorobutanesulfonyl) imide, lithium nonafluoro-N-[(trifluoromethane)sulfonyl]butanesulfonylamide, lithium N,N-hexafluoro-1,3-disulfonylimide, $CH_3COOLi$, $LiPF_6$, $LiBF_4$, $Li_2SO_4$ and $LiNO_3$.

The concentration of the electrolyte in the aqueous electrolytic solution can be appropriately determined depending on desired battery properties, as long as the concentration does not exceed the saturation concentration of the electrolyte with respect to the solvent. This is because, when the electrolyte remains in a solid form in the aqueous electrolytic solution, the solid electrolyte may interfere with battery reaction.

For example, in the case of using LiTFSI as the electrolyte, the amount of the LiTFSI contained in the aqueous electrolytic solution may be 1 mol or more, 5 mol or more, or 7.5 mol or more per kg of the water. The upper limit of the amount is not particularly limited, and it may be 25 mol or less, for example.

As the non-aqueous electrolytic solution, one containing a lithium salt and a non-aqueous solvent is generally used.

As the lithium salt, examples include, but are not limited to, an inorganic lithium salt such as $LiPF_6$, $LiBF_4$, $LiClO_4$ and $LiAsF_6$, and an organic lithium salt such as $LiCF_3SO_3$, $LiN(SO_2CF_3)_2$(Li-TFSI), $LiN(SO_2C_2F_5)_2$ and $LiC(SO_2CF_3)_3$.

As the non-aqueous solvent, examples include, but are not limited to, ethylene carbonate (EC), propylene carbonate (PC), butylene carbonate (BC), dimethyl carbonate (DMC), diethyl carbonate (DEC), ethyl methyl carbonate (EMC), γ-butyrolactone, sulfolane, acetonitrile (AcN), dimethoxymethane, 1,2-dimethoxyethane (DME), 1,3-dimethoxypropane, diethyl ether, tetraethylene glycol dimethyl ether (TEGDME), tetrahydrofuran, 2-methyltetrahydrofuran, dimethylsulfoxide (DMSO) and mixtures thereof. From the viewpoint of obtaining high dielectric constant and low viscosity, the non-aqueous solvent may be a mixture of a cyclic carbonate compound having high dielectric constant and high viscosity (such as EC, PC and BC) and a chain carbonate compound having low dielectric constant and low viscosity (such as DMC, DEC and EMC), or it may be a mixture of EC and DEC.

The concentration of the lithium salt in the non-aqueous electrolytic solution may be from 0.3 M to 5 M, for

example.

The non-aqueous electrolytic solution may contain an ionic liquid. The ionic liquid may contain, for example, at least one selected from the group consisting of sulfonium salt, ammonium salt, pyridinium salt, piperidinium salt, pyrrolidinium salt, morpholinium salt, phosphonium salt, imidazolium salt and derivatives thereof.

As the electrolyte layer, a separator which is impregnated with the above-mentioned electrolytic solution and is configured to prevent contact between the cathode layer and the anode layer, may be used.

The material for the separator is not particularly limited, as long as it is a porous film. As the material, examples include, but are not limited to, resins such as polyethylene (PE), polypropylene (PP), polyester, polyvinyl alcohol, cellulose and polyamide. Of them, the material for the separator may be polyethylene or polypropylene. The separator may have a single-layered structure or a multi-layered structure. As the separator having a multi-layered structure, examples include, but are not limited to, a separator having a two-layered structure such as PE/PP, and a separator having a three-layered structure such as PP/PE/PP and PE/PP/PE.

The separator may be a non-woven fabric such as a resin non-woven fabric and a glass fiber non-woven fabric.

[Solid electrolyte layer]

The electrolyte layer may be a solid electrolyte layer composed of a solid.

When the electrolyte layer is the solid electrolyte layer, the solid electrolyte layer contains a solid electrolyte. As needed, it contains a binder and so on.

As the solid electrolyte, examples include, but are not limited to, those exemplified above as the solid electrolyte of the cathode layer.

The solid electrolyte may be one solid electrolyte, or it may be two or more solid electrolytes. In the case of using two or more solid electrolytes, they may be mixed together, or they may be formed into layers to obtain a multi-layered structure.

The amount of the solid electrolyte in the solid electrolyte layer is not particularly limited. For example, it may be 50% by mass or more; it may be in a range of 60% by mass or more and 100% by mass or less; it may be in a range of 70% by mass or more and 100% by mass or less; or it may be 100% by mass. The electrolytic solution contained in the solid electrolyte layer may be less than 1% by mass with respect to the total amount of the solid electrolyte layer.

As the binder, examples include, but are not limited to, a binder that can be incorporated in the above-described cathode layer.

The content of the binder in the solid electrolyte layer may be from 0% by mass to 10% by mass with respect to the total amount of the solid electrolyte layer.

The thickness of the electrolyte layer is 0.1 μm or more and 1000 μm or less, for example. The thickness of the electrolyte layer may be 0.1 μm or more and 500 μm or less, or it may be 0.1 μm or more and 100 μm or less.

In the present disclosure, the battery may further include a fixing jig for applying a fixing pressure to the cathode layer, the electrolyte layer and the anode layer along the thickness direction. Especially when the electrolyte layer is the solid electrolyte layer, the fixing pressure may be applied for the formation of good ion conducting paths and electron conducting paths. The fixing pressure is 0.1 MPa or more, for example. The fixing pressure may be 1 MPa or more, or it may be 5 MPa or more. On the other hand, the fixing pressure is 100 MPa or less, for example. The fixing pressure may be 50 MPa or less, or it may be 20 MPa or less.

[Battery]

In the present disclosure, the type of the battery is not particularly limited. The battery of the present disclosure is typically a lithium ion battery. Also in the present disclosure, the battery may be a liquid battery in which the electrolyte layer contains an electrolytic solution, or it may be a solid-state battery in which the electrolyte layer contains a solid electrolyte. The solid-state battery may be a semi-solid-state battery or an all-solid-state battery. In the present disclosure, the semi-solid-state battery is a battery in which the electrolyte layer contains a solid component (such as an inorganic solid electrolyte) and a liquid component (such as a solvent and an electrolytic solution). In the present disclosure, the all-solid-state battery is a battery in which the electrolyte layer contains, as the electrolyte, only a solid component such as an inorganic solid electrolyte. In the present disclosure, the battery may be a primary battery or a secondary battery. Among them, the solid-state battery may be a secondary battery. This is because a secondary battery can be repeatedly charged and discharged, and it is useful as an in-vehicle battery, for example.

The form of the battery is not particularly limited. For example, it may be a coin form, a cylindrical form, a square form, a sheet form, a button form, a flat form or a laminate form.

When the battery is a cell stack consisting of stacked cells, the cell stack may be a monopolar cell stack or a bipolar cell stack.

As the applications of the battery, examples include, but are not limited to, the power source of vehicles such as a

hybrid electric vehicle (HEV), a plug-in hybrid electric vehicle (PHEV), a battery electric vehicle (BEV), a gasoline vehicle and a diesel vehicle. Especially, the battery of the present disclosure may be used as the driving power supply of a hybrid electric vehicle (HEV), a plug-in hybrid electric vehicle (PHEV) or a battery electric vehicle (BEV). Also, the battery of the present disclosure may be used as the powder source of mobile objects other than vehicles, such as railroads, ships and aircraft, or it may be used as the power source of electrical appliances such as information processing devices.

The present disclosure is not limited to the above-mentioned embodiments. The above-mentioned embodiments are examples, and any that has the substantially same essential features as the technical ideas described in the claims of the present disclosure and exerts the same effects and advantages as the embodiments is included in the technical scope of the present disclosure.

## EXAMPLES

### (Example 1)

[Synthesis of the transition metal hydroxide]

First, $NiSO_4$, $CoSO_4$ and $MnSO_4$ were dissolved in deionized water to prepare a raw material aqueous solution. The ratio between the Ni, Co and Mn in the raw material aqueous solution was Ni:Co:Mn = 80:10:10. The concentration of the raw material aqueous solution (the ratio of all the raw materials to the raw material aqueous solution) was 30% by mass.

<Hydrothermal synthesis (crystallization)>

A certain amount of $NH_3$ aqueous solution was put in a reaction container. While stirring the $NH_3$ aqueous solution with a stirrer, the atmosphere inside the reaction container was replaced with nitrogen. Then, a NaOH aqueous solution was put in the reaction container. While keeping the pH of the NaOH aqueous solution alkaline (pH 12) and controlling the temperature thereof at a certain temperature, the raw material aqueous solution and another $NH_3$ aqueous solution were added dropwise to the reaction container, thereby precipitating a transition metal hydroxide. The reaction temperature was 60°C. The small particle of the transition metal hydroxide and the large particle of the transition metal hydroxide were obtained. The reaction time required to obtain the small particle was two hours. The reaction time required to obtain the large particle was 6 hours.

<Filtering>

After the hydrothermal synthesis, the transition metal hydroxide was dispersed in and washed with deionized water. Then, the washed transition metal hydroxide was filtered to obtain the transition metal hydroxide.

<Drying>

The obtained transition metal hydroxide was a dried at 120°C for 16 hours for water evaporation. The thus-obtained dried product of the transition metal hydroxide was classified into the small particle of the transition metal hydroxide and the large particle thereof by use of a molecular sieve.

[Synthesis of the cathode active material]

<Mixing with Li raw material>

The small particles of the transition metal hydroxide and the large particles thereof were mixed at a mass ratio of 1:1. Using an agate mortar, the transition metal hydroxide that was the mixed particles was mixed with LiOH that was a lithium compound as the Li source, thereby obtaining a mixture.

They were mixed so that the mole ratio (Li/NCM ratio) of the lithium compound to the total (NCM) of the Ni, Co and Mn contained in the transition metal hydroxide, was adjusted to 1.1.

<First sintering>

Using a furnace, the obtained mixture was sintered in an oxygen atmosphere at 1000°C for 10 hours, thereby synthesizing a cathode active material ($Li_{1.1}Ni_{0.8}Co_{0.1}Mn_{0.1}O_2$), i.e., obtaining the first sintered product.

<First grinding>

Using a grinding mill that was a jet mill, the first sintered product was ground to a predetermined particle diameter.

<Magnetic field orientation>

First, 100 ml of NMP and 50 g of the ground first sintered product were put in a beaker. They were mixed by stirring to obtain a slurry. The obtained slurry in the beaker was left to stand for 10 minutes in such a space, that 1 T magnets were placed above and below the beaker in the space.

<Slurry drying>

Then, the beaker was gently moved and placed in a dryer, and the slurry was dried at 150°C for 6 hours.

<Second sintering>

A dried product thus obtained was gently put into an alumina crucible. The alumina crucible was gently moved and placed in a furnace. In the furnace, the dried product was sintered in an oxygen atmosphere at 850°C for 10 hours, thereby obtaining the second sintered product that was the cathode active material ($Li_{1.1}Ni_{0.8}Co_{0.1}Mn_{0.1}O_2$).

<Second grinding>

Using the grinding mill (the jet mill), the second sintered product (the cathode active material) was ground to a predetermined particle diameter, thereby obtaining the particles of the cathode active material.

(Example 2)

The cathode active material of Example 2 was produced in the same manner as Example 1, except that the sintering temperature of the second sintering (<Second sintering>) was set to 950°C.

(Comparative Example 1)

The cathode active material of Comparative Example 1 was produced in the same manner as Example 1, except for the following: in the hydrothermal synthesis (crystallization) (<Hydrothermal synthesis (crystallization)>), the reaction time was set to three hours, and the medium particles of the transition metal hydroxide were obtained; moreover, in the synthesis of the cathode active material ([Synthesis of the cathode active material]), the magnetic field orientation (<Magnetic field orientation>) to the second grinding (<Second grinding>) were not carried out, and the particles of the first sintered product obtained by the first grinding (<First grinding>) in the synthesis of the cathode active material ([Synthesis of the cathode active material]) was used as the cathode active material.

(Comparative Example 2)

The cathode active material of Comparative Example 2 was produced in the same manner as Example 1, except that the sintering temperature of the second sintering (<Second sintering>) was set to 650°C.

[SEM analysis of the cathode active materials]

The cathode active materials of Examples 1 to 2 and Comparative Example 2 were observed by SEM. Next, 50 particles were randomly selected from the primary particles of each cathode active material shown in a SEM image. The longest radius of each of the selected primary particles was calculated. Based on the calculated radii, a histogram was created. Using the histogram, the particle size distribution of large and small particles was determined, and D50 in the volume-based particle size distribution of the large and small particles was calculated. The results are shown in Table 1.

[TEM analysis]

The cathode active materials of Examples 1 and 2 and Comparative Examples 1 and 2 were observed using TEM images thereof.

In the cathode active materials of Examples 1 and 2, at the periphery of each of the cathode active materials

viewed in cross-section under TEM, it was observed that the 003 plane and the different plane were alternately exposed. In the cathode active materials of Examples 1 and 2, it was observed that the lengths of the adjacent primary particles in the direction parallel to the 003 planes were different.

In the cathode active materials of Examples 1 and 2, when viewed in cross-section under TEM, it was observed that the primary particles were oriented and stacked so that the 003 planes thereof were in parallel.

In the cathode active materials of Comparative Examples 1 and 2, at the periphery of each of the cathode active materials viewed in cross section under TEM, it was not observed that the 003 plane and the different plane were alternately exposed. This is thought to be because, since the D50 values of the large and small particles used were close values in the cathode active material of Comparative Example 2, the 003 planes of the stacked first and second particles were not exposed at the grain boundary thereof. In the cathode active materials of Comparative Examples 1 and 2, it was also observed that the lengths of the adjacent primary particles in the direction parallel to the 003 planes were the same.

[Production of cells (wound cylindrical cells)]

The wound cylindrical cell of Example 1 was produced as follows by use of the cathode active material of Example 1.

First, a cathode mixture paste containing the cathode active material, Acetylene Black (an electroconductive material) and polyvinylidene fluoride (a binder) was applied to a surface of a metal foil (a cathode collector) by a film applicator with film thickness adjustability (manufactured by Allgood Co., Ltd.) Then, the applied paste was dried by a dryer at 80°C for 5 minutes to form a cathode layer on the cathode collector, thereby producing a cathode. The composition of the cathode mixture paste was such that the cathode active material, the electroconductive material and the binder were in a mass ratio of 88:10:2.

Next, an anode mixture paste containing natural graphite (an anode active material), SBR (a binder) and CMC (a thickener) was applied to a surface of a metal foil (an anode collector) by a film applicator with film thickness adjustability (manufactured by Allgood Co., Ltd.) Then, the applied paste was dried by a dryer at 80°C for 5 minutes to form an anode layer on the anode collector, thereby producing an anode.

As an electrolytic solution, a 1 M $LiPF_6$ solution was prepared, which contained an electrolyte that was $LiPF_6$ and a solvent that was a mixture of ethylene carbonate (EC), dimethyl carbonate (DMC) and ethyl methyl carbonate (EMC) at a volume ratio of EC/DMC/EMC = 3/4/3.

The cathode, a separator and the anode were stacked, and the separator was impregnated with the electrolytic solution, thereby producing the wound cylindrical cell of Example 1. In the same manner as Example 1, the wound cylindrical cells of Example 2 and Comparative Examples 1 and 2 were also produced.

[Cell evaluation]

The produced wound cylindrical cells were evaluated for IV resistance before and after a cycle test of 100 cycles. The 100 cycles of the cycle test were conducted in the following conditions.

<Cycling conditions>

Voltage range: 3.0 V to 4.3 V
C rate: 0.3 C
Mode: CC charge and discharge
Temperature: 50°C

[IV resistance measurement]

Cell voltage was adjusted in a voltage range of from 3.0 V to 4.3 V to achieve a SOC of 50%, while considering the upper limit voltage of 4.3 V as a SOC of 100%.

Cell voltage drop (V) was measured at C rates of 0.1 C, 0.3 C, 0.5 C, 0.7 C and 1.0 C, when the cell was discharged for 10 seconds at 0°C.

The relationship between the current value and voltage drop (V) of the cell was plotted, and the slope of an approximate straight line created by a linear function was considered as IV resistance.

[Calculation of IV resistance increase rate after the 100 cycles]

The above-described measurement was carried out before and after the cycle test of the 100 cycles. The amount of change before and after the cycle test was calculated and used as the resistance increase rate.

IV resistance increase rate (%) after the 100 cycles = (IV resistance after the cycle test) / (IV resistance before the cycle test) $\times$100

[SEM analysis of the cathode layers]

The cathode layers of the cells of Examples 1 and 2 and Comparative Examples 1 and 2 were observed by SEM. Next, 50 particles were randomly selected from the primary particles of the cathode active material of each cathode layer shown in a SEM image. The longest radius of each of the selected primary particles was calculated. Based on the calculated radii, a histogram was created. Using the histogram, the (D90-D10)/D50 of the primary particles of the cathode active material was calculated. The results are shown in Table 1.

Table 1

| | Cathode active material | | | | Magnetic field orientation | Second sintering | D50 | D50 | (D90-D10)/D50 | Plane alternation | After the 100 cycles |
|---|---|---|---|---|---|---|---|---|---|---|---|
| | Li/NCM | Ni/NCM | Co/NCM | Mn/NCM | | Temperature | Large particles | Small particles | | | Resistance increase rate |
| | Ratio | Ratio | Ratio | Ratio | Present or Absent | °C | µm | µm | - | Present or Absent | % |
| Comparative Example 1 | 1.1 | 0.8 | 0.1 | 0.1 | Absent | - | - | - | 1.05 | Absent | 148 |
| Comparative Example 2 | 1.1 | 0.8 | 0.1 | 0.1 | Present | 650 | 2.8 | 2.3 | 1.13 | Absent | 145 |
| Example 1 | 1.1 | 0.8 | 0.1 | 0.1 | Present | 850 | 3.1 | 1.0 | 1.32 | Present | 122 |
| Example 2 | 1.1 | 0.8 | 0.1 | 0.1 | Present | 950 | 4.2 | 1.1 | 1.65 | Present | 124 |

Based on the results shown in Table 1, the following comparison was made.

As is clear from Table 1, the resistance increase rates after the 100 cycles of the batteries using the cathode active materials of Examples 1 and 2, are small compared to those of the batteries using the cathode active materials of Comparative Examples 1 and 2. Accordingly, it is revealed that the resistance increase rate due to battery charge and discharge is decreased by using the cathode active material which the 003 plane and the plane different from the 003 plane are alternately exposed at the periphery of the cathode active material in the TEM cross-sectional image.

REFERENCE SIGNS LIST

10. First particle

20. Second particle

30. Third particle

40. Fourth particle

100. Cathode active material

## Claims

**1.** A cathode active material (100) comprising at least one element selected from the group consisting of a Ni element, a Co element and a Mn element,

wherein the cathode active material (100) is in a form of two or more stacked primary particles;
wherein the primary particles are single crystals that have a crystal structure belonging to space group R-3m;
wherein the two or more stacked primary particles as the cathode active material (100) include at least a first particle (10) and a second particle (20), and the first and second particles are sequentially connected;
wherein, at a periphery of the cathode active material (100) when the cathode active material (100) is viewed in cross-section under a transmission electron microscope, at least part of a 003 plane of each of the primary particles is exposed;
wherein the first particle (10) and the second particle (20) are oriented and stacked so that the 003 plane of the first particle (10) and that of the second particle (20) are in parallel; and
wherein, when the cathode active material (100) is viewed in cross-section under the transmission electron microscope, a length of the first particle (10) in a direction parallel to the 003 planes of the primary particles, is different from that of the second particle (20) in the same direction.

**2.** The cathode active material (100) according to claim 1,

wherein the cathode active material (100) is in a form of three or more stacked primary particles;
wherein, at the periphery of the cathode active material (100) when the cathode active material (100) is viewed in cross-section under the transmission electron microscope, the at least part of the 003 plane of each of the primary particles is exposed;
wherein the primary particles are oriented and stacked so that the 003 planes of the primary particles are in parallel; and
wherein, when the cathode active material (100) is viewed in cross-section under the transmission electron microscope, lengths of the adjacent primary particles in the direction parallel to the 003 planes of the primary particles, are different from each other.

**3.** The cathode active material (100) according to claim 1 or 2,

wherein, at the periphery of the cathode active material (100) when the cathode active material (100) is viewed in cross-section under the transmission electron microscope, a plane different from the 003 plane of each of the primary particles is exposed in a direction perpendicular to the 003 plane of the primary particle; and
wherein the plane different from the 003 plane of each of the primary particles is a 012, 101, 104 or 110 plane.

**4.** The cathode active material (100) according to any one of claims 1 to 3, wherein the cathode active material (100) is in a form of two or more and 100 or less stacked primary particles.

**5.** The cathode active material (100) according to any one of claims 1 to 4, wherein a ratio of the length of the first particle (10) in the direction parallel to the 003 planes of the primary particles to that of the second particle (20) in the same direction, is from 1.1 to 2.0.

**6.** The cathode active material (100) according to any one of claims 1 to 5, wherein (D90-D10)/D50 in a volume-based particle size distribution of the two or more stacked primary particles is 1.30 or more and 1.70 or less.

**7.** A cathode layer comprising the cathode active material (100) defined by any one of claims 1 to 6.

**8.** A battery comprising a cathode layer comprising the cathode active material (100) defined by any one of claims 1 to 6.

**9.** A method for producing the cathode active material (100) defined by any one of claims 1 to 6, the method comprising:

a first sintering step of obtaining a precursor of the cathode active material (100) by sintering a first mixture of a large particle of a transition metal hydroxide and a small particle thereof, which has a smaller particle diameter than that of the large particle, at a temperature of from 700°C to 1100°C,
a magnetic field applying step of applying a magnetic field to a slurry obtained by dispersing the precursor of the cathode active material (100) in a solvent,
a drying step of obtaining a dried product by drying the slurry, and
a second sintering step of obtaining the cathode active material (100) by sintering the dried product at a temperature of from 800°C to 1000°C.

FIG. 1

100
003
10
L1
104
003
003
20
104
L2
003
L3
003
104
30
003
L4
40
104
003

Europäisches
Patentamt
European
Patent Office
Office européen
des brevets

# EUROPEAN SEARCH REPORT

Application Number
EP 26 16 4783

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SU YUEFENG ET AL: "Exposing the {010} Planes by Oriented Self-Assembly with Nanosheets To Improve the Electrochemical Performances of Ni-Rich Li[Ni<sub>0.8</sub>Co<sub>0.1</sub>Mn<sub> 0.1</sub>]O<sub>2</sub> Microspheres", ACS APPLIED MATERIALS & INTERFACES, vol. 10, no. 7, 12 February 2018 (2018-02-12), pages 6407-6414, XP093421194, ISSN: 1944-8244, DOI: 10.1021/acsami.7b18933 | 1-8 | INV. C01G53/00 |
| Y | * abstract; figures 1,3 * ----- | 9 | |
| Y | Sun Wenrui ET AL: "The modification of NCM cathode material prepared by hydrothermal method under pulsed high magnetic field", , 2 December 2024 (2024-12-02), XP093421182, DOI: 10.21203/rs.3.rs-5443801/v1 Retrieved from the Internet: URL:https://aces.onlinelibrary.wiley.com/doi/full/10.1002/cnma.202500015 * material preparation, structure and morphology,conclusion; figures 1,2 * ----- | 9 | |

| TECHNICAL FIELDS SEARCHED (IPC) |
|---|
| C01G |
| C01D |

The present search report has been drawn up for all claims

| Place of search | Date of completion of the search | Examiner |
|---|---|---|
| Munich | 31 July 2026 | Fischbach, Malaika |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013065397 A
- WO 2012046557 A